(19) Europäisches Patentamt
European Patent Office
Office européen des brevets

(11) Publication number: **0 093 769**
**B1**

(12) # EUROPEAN PATENT SPECIFICATION

(45) Date of publication of patent specification: **04.02.87**

(51) Int. Cl.$^4$: **G 06 F 12/14**

(21) Application number: **83900113.8**

(22) Date of filing: **08.11.82**

(86) International application number:
**PCT/US82/01581**

(87) International publication number:
**WO 83/01848 26.05.83 Gazette 83/13**

(54) **MEMORY SECURITY SYSTEM.**

(30) Priority: **12.11.81 US 320790**

(43) Date of publication of application:
**16.11.83 Bulletin 83/46**

(45) Publication of the grant of the patent:
**04.02.87 Bulletin 87/06**

(84) Designated Contracting States:
**DE FR GB**

(56) References cited:
**FR-A-2 311 360**
**FR-A-2 471 004**
**US-A-4 005 386**
**US-A-4 262 337**

(73) Proprietor: **NCR Corporation**
**World Headquarters**
**Dayton, Ohio 45479 (US)**

(72) Inventor: **DEVCHOUDHURY, Rathindra Nath**
**52 Highgate Circle**
**Ithaca, NY 14850 (US)**

(74) Representative: **Robinson, Robert George**
**International Patent Department NCR Limited**
**206 Marylebone Road**
**London NW1 6LY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 093 769 B1

**Description**

Technical field

This invention relates to apparatus of the kind for controlling the operation of a memory device, including operational control means responsive to a plurality of enabling signals to provide an operating signal for said memory device.

The invention also relates to methods of the kind for controlling the operation of a memory device, including the steps of providing a plurality of memory enabling signals and generating an operating signal for said memory device in response thereto.

Background art

The invention has a particular application to controlling the operation of read-only memory (ROM) devices. An example of a ROM which is at present commercially available is the Intel 231 6E manufactured by Intel Corporation.

With increasing emphasis towards software programs, the need to protect such programs also increases. Once a program or other data has been stored in the known memory device, it is very easy for one to remove the memory device from its associated microprocessor and copy the program from the memory device using well-known circuits. Thus the known memory device has the disadvantage that the contents thereof can readily be utilized or copied by unauthorized persons.

From US—A—4,092,524 there is known an apparatus and a method of controlling a memory device wherein a sequence of signal levels is fed to a comparator and compared with a predetermined pattern read from the memory device. In the event of a favourable comparison the comparator produces an output signal which enables an authorization control device to provide an enabling signal which is applied to gating circuits connected to the data output of the memory device, thereby permitting the memory device output to be coupled to external circuitry.

From US—A—4,262,337 there is known a portable calculator including a keyboard and a display, and provided with circuitry which disables operation of the display until a predetermined sequence of digits has been entered in the keyboard. The circuitry includes a plurality of latches which are set in sequence in response to the application of power to the calculator. The latches are reset sequentially in response to the application of a predetermined sequence of digits in the keyboard, thereby making the display operative.

Disclosure of the invention

It is an object of the present invention to provide apparatus of the kind specified which has a high degree of security against utilization or copying by unauthorized persons.

Therefore, according to the present invention, there is provided apparatus of the kind specified, characterized in that said enabling signals include respective sequences of signal levels, in that logic circuit means are provided including a plurality of serially connected switching members each except the last adapted when operated to provide a respective switching signal conditioning the succeeding switching member for operation, in that said logic circuit means further includes gating means adapted to receive said enabling signals and said switching signals and to output a series of clocking signals in response to said enabling signals conforming to a predetermined pattern, in that said clocking signals are arranged to operate said switching members such that a control signal is produced by the last one of said switching members in response to said sequences of signal levels conforming to said predetermined pattern and in that said control signal is adapted to enable enabling control means to allow said enabling signals to provide said operating signal and in that these are provided disabling means coupled to said logic circuit means and to said switching members and adapted in response to at least one of said clocking signals not being produced, to disable the operation of said switching members.

It will be appreciated that in apparatus according to the invention a high degree of security is provided since it is difficult for an unauthorized person to utilize the memory device without the knowledge of the predetermined pattern of enabling signal levels. A further advantage is that the apparatus can be readily provided as part of the memory control unit and hence is not readily discernible. Other advantages are that the circuit is simple in construction and low in cost.

According to another aspect of the invention, there is provided a method of the kind specified characterized by the steps of providing said enabling signals to include respective sequences of signal levels, sequentially checking for conformity to a predetermined pattern the signal levels of predetermined ones of said enabling signals by using a plurality of serially connected switching members each except the last adapted when operated to provide a respective switching signal conditioning the succeeding switching member for operation, and by using gating means adapted to receive said enabling signals and said switching signals for generating clocking signals in response to the checked signals being valid and applying said clocking signals sequentially to the serially connected switching members, generating a control signal in response to the operation of the last switching member, generating said operating signal in response to the provision of said control signal, and generating a disabling signal for said switching members in the event that a clocking signal is not generated.

Brief description of the drawings

One embodiment of the present invention will now be described by way of example with reference to the accompanying drawings, in which:

Fig. 1 is a block diagram of a memory unit showing the chip-select lines coupled to the input buffer and control logic unit in which is located the control circuit for enabling the operation of the memory unit;

Fig. 2 is a block diagram of an edge detect circuit for generating control signals used in controlling the operation of the ROM memory unit;

Fig. 3 is a block diagram of the control circuit located in the input buffer and control logic of the ROM memory unit for controlling the operation of the memory unit;

Fig. 4 is a diagram showing the chip select signals which enable the ROM memory unit for operation;

Fig. 5 is a block diagram of the sequential logic circuit of the control circuit of Fig. 3; and

Fig. 6 is a diagram of the control signals generated in the operation of the sequential logic circuit;

Best mode for carrying out the invention

Referring now to Fig. 1, there is shown a block diagram of a ROM memory unit generally indicated by the numeral 20 which includes the present invention. Included in the memory unit 20 is a 16384 bit cell matrix 22 to which is coupled a decoder 24 which decodes the address bits $A_0$—$A_6$ inclusive transmitted over lines 28 and received from the address input buffer 26. The adderss bits $A_7$—$A_{10}$ inclusive transmitted over the lines 28 are inputted into a decoder 30 which decodes the data read out of the matrix 22. The decoded data bits $D_0$—$D_7$ are outputted to the output buffer 32 for transmission over lines 34 to a receiving unit.

Further included in the ROM memory unit 20 is an input buffer and control logic unit 36 which receives the active low chip select signals $\overline{CS_1}$, $\overline{CS_2}$ and the active high chip select signal $CS_3$ over lines 38, 40 and 42 for transmission to a chip select program unit 44 which selects the chip to be accessed in accordance with a program stored in the unit. The chip select signals outputted from the program unit 44 are transferred to a chip select decoder 46 which controls the operation of the output buffer 32 to output the required data over lines 34 to the receiving unit.

Referring now to Fig. 3, there is shown a block diagram of the control logic circuit located in the input buffer unit 36 (Fig. 1) of the ROM memory unit 20, which will enable the memory unit upon receiving a predetermined bit pattern of the chip select signals $\overline{CS_1}$, $\overline{CS_2}$ and $CS_3$. Included in this circuit is a reset generator 48 which receives over line 50 the chip power supply voltage signal $V_{CC}$. The generator 48 will output the signal RESET (Fig. 4b) upon the signal $V_{CC}$ (Fig. 4a) going high over line 52 to a sequential logic circuit 54 which receives over the lines 38, 40 and 42 the chip select signals $\overline{CS_1}$, $\overline{CS_2}$ and $CS_3$ respectively.

In accordance with the present invention, the chip select signals $\overline{CS_1}$, $\overline{CS_2}$ and $CS_3$ are required to exhibit the predetermined bit pattern before the ROM memory unit 20 can be enabled. In the present example, the signals $\overline{CS_1}$, $\overline{CS_2}$ and $CS_3$ are required to have a first predetermined bit pattern of 0, 0 and 1 respectively to enable the ROM memory unit for operation. Prior to the generation of this bit pattern, such chip select signals are required to exhibit a second predetermined bit pattern which in the present embodiment is a 8-bit sequence. As shown in Fig. 4c, the chip select signal $\overline{CS_1}$, is required to exhibit the bit pattern 1, 1, 1, 0, 0, 0, 1 and 1. In a similar manner, the signal $\overline{CS_2}$ (Fig. 4d) must exhibit the bit pattern 0, 0, 0, 0, 1, 1, 1 and 0 while the signal $CS_3$ (Fig. 4e) is required to exhibit the pattern 0, 1, 0, 0, 0, 1, 1 and 1. If the second predetermined bit pattern of the chip select signals has been generated, the sequential logic circuit 54 (Fig. 3) will output the active high signal I (Fig. 4f) over line 56 to an AND gate 58 enabling the AND gate to gate the next $CS_3$ signal appearing on line 42 over line 60 to the chip select program unit 44 enabling the decoder 46 to control the buffer 32 to output data over lines 34 upon the generation of the first predetermined bit pattern of the chip select signals $\overline{CS_1}$, $\overline{CS_2}$ and $CS_3$ appearing on lines 38, 40 and 60 respectively (Fig. 3).

Referring now to Fig. 5, there is shown a block diagram of the sequential logic circuit 54 (Fig. 3) for checking the second predetermined bit pattern of the chip select signals. Included in the circuit is a plurality of D-type flip-flops 62—70 inclusive, the number of flip-flops corresponding to the number of binary bits in the bit pattern of each of the chip select signals plus one. Further included in the logic circuit is a plurality of AND gates 72—86 inclusive, each receiving the output signal S of one of the flip-flops 62—69 inclusive. The other input of each of the AND gates 72—86 inclusive receives one of the chip select signals $\overline{CS_1}$, $\overline{CS_2}$ and $CS_3$. The output signal S of the flip-flops 62—69 inclusive sequentially enables one of the AND gates 72—86 inclusive to gate one of the chip select signals which in turn enables the next flip-flop to clock the output signal S. If this selected pattern of the chip select signals is correct, the last flip-flop 70 will be clocked to output the high signal I (Fig. 4f) over line 56 enabling the AND gate 58 (Fig. 3) to output the chip select signal $CS_3$ over line 60 resulting in the ROM unit 20 entering an operating mode. An inverter gate 138 is employed to present the proper level of the chip select signals to the AND gates 72—81 inclusive.

As shown in Fig. 5, each of the AND gates 72—86 inclusive is connected over line 88 to an OR gate 90 whose output line 91 is connected to a delay circuit comprising a plurality of noninverting gates 92. The output line 94 of the last gate 92 is connected to the clock input of the flip-flops 62—70 inclusive. The output line 94 of the gates 92 is also connected to one input of a NOR gate 96 which together with a second NOR gate 98 forms a latch circuit generally indicated by the numeral 99 for use in disabling the ROM memory unit 20 when the required bit pattern of the chip select signals is not presented.

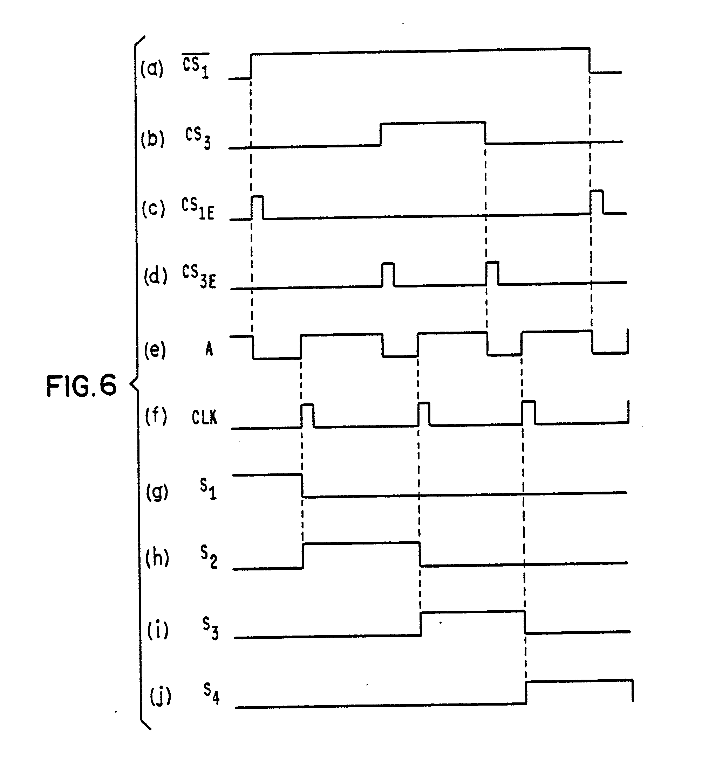

The NOR gate 98 (Fig. 5) receives the signals $CS_{1E}$ (Fig. 6c), $CS_{2E}$ and $CS_{3E}$ (Fig. 6d) which are pulses generated by edge detector circuits 100 receiving the chip select signals $\overline{CS_1}$, $\overline{CS_2}$ and $CS_3$. The signals $CS_{1E}$—$CS_{3E}$ inclusive appearing on lines 102, 104 and 106, respectively, are also inputted into an OR gate 108 whose output line 110 is connected to the clock input of a D-type flip-flop 112 which also receives at its D input the output signal of the NOR gate 98 over line 140. The output signal of the flip-flop 112 is inputted over line 116 to the clear input of the flip-flop 62 and to one input of an OR gate 118 which outputs a clear signal over line 120 to the clear inputs of the flip-flops 63—70 inclusive. The OR gate 118 also receives the signal RESET (Fig. 4b) over line 52. As will be described more fully hereinafter, the flip-flops 62—70 inclusive will be cleared whenever the chip select signals $\overline{CS_1}$, $\overline{CS_2}$ and $CS_3$ do not present the proper bit patterns.

Referring to Fig. 2, there is shown a block diagram of the edge detector circuit 100 (Fig. 5) for chip select signal $\overline{CS_1}$ which includes inverter circuit gates 122, 124 and 126 and an Exclusive OR gate 128 which receives the output signal of the inverter circuit 126 and the chip select signal $\overline{CS_1}$ appearing on line 38. The output signal of the Exclusive OR gate 128 is inverted by the inverter circuit gate 130 whose output signal $CS_{1E}$ is inputted into the NOR gate 98 and the OR gate 108 (Fig. 5) as previously described. Similar circuit arrangements are provided for each of the chip select signals $\overline{CS_2}$ and $CS_3$.

In the operation of the memory unit 20, once the power signal $V_{CC}$ reaches a power-up level (Fig. 4a), the reset generator 48 (Fig. 3) will output the high signal RESET (Fig. 4b) over line 52 which resets the latch circuit 99 and also clears the flip-flops 63—70 (Fig. 5) inclusive by the appearance of the signal RESET on the output line 120 of the OR gate 118. The RESET signal also sets the flip-flop 62 which outputs a high signal S1 (Fig. 6g) over line 132 conditioning the AND gate 72 to output the chip select signal $\overline{CS_1}$ appearing on its other input line 38. If the proper bit sequence is presented, the chip select signal $\overline{CS_1}$ (Figs. 4c and 6a) will be high, which is gated by the AND gate 72 over line 88 through the OR gate 90 and the inverter gates 92 which will then appear on line 94 as the clock signal CLK (Fig. 6f). The signal CLK will be inputted into the clock inputs of the flip-flops 62—70 inclusive clocking the flip-flops. Since at this time the D input of the flip-flop 63 is receiving the high signal S1, the clocking of the flip-flop results in the appearance on the Q output of the flip-flop 63 the high signal S2 (Fig. 6h) which is inputted over line 136 into the next AND gate 74. Upon the inputting of the next set of chip select signals $\overline{CS_1}$, $\overline{CS_2}$ and $CS_3$ (Figs. 4c—4e), the chip select signal $CS_3$ is selected to be inputted into the AND gate 74. A second clock signal (Fig. 6f) is generated upon the signal $CS_3$ (Figs. 4e and 6b) going high resulting in the clocking of the next flip-flop 64. It will be seen from this construction that if the proper bit pattern of the chip select signals are inputted into the circuit, each of the flip-flops 63—70 inclusive will be sequentially clocked by the signal CLK until the flip-flop 70 will output the signal I over line 56 enabling the AND gate 58 (Fig. 3) to output the next chip select signal $CS_3$ allowing the ROM memory unit 20 to be accessed by the address data bits $A_0$—$A_{10}$ (Fig. 1) in a manner that is well-known in the art.

The signal CLK is also inputted into the NOR gate 96 of the latch 99 whose output signal is inputted into the NOR gate 98 (Fig. 5). When the signal RESET (Fig. 4b) goes high, the NOR gate 96 will output a low signal which is transmitted over line 114 to the NOR gate 98. Upon the changing of any of the chip select signals, the corresponding signals $CS_{1E}$—$CS_{3E}$ inclusive will go high resulting in the output signal of the NOR gate 98 appearing at point A (Figs. 5 and 6e) going low. This signal is transmitted over line 140 to the NOR gate 96. Upon the signal CLK going high, the NOR gate 96 will output a low signal over line 114 to the NOR gate 98 whose output signal appearing at point A will go high. If the signal CLK is low, indicating the bit pattern of the chip select signals is not valid, the signal appearing at point A (Figs. 5 and 6e) will remain low until the chip select signals again change state. Any time the chip select signals $\overline{CS_1}$, $\overline{CS_2}$ and $CS_3$ inclusive change state, the corresponding signals $CS_{1E}$—$CS_{3E}$ inclusive (Fig. 6c and 6d) inputted into the OR gate 108 (Fig. 5) will go high enabling the gate 108 to output a high signal over line 110 to the clock input of the flip-flop 112. It will be seen from this arrangement that the $\overline{Q}$ output signal of the flip-flop 112 remains low as long as the proper bit patterns are maintained on the chip select signals. If at any time the proper bit pattern is not presented, the $\overline{Q}$ output signal of the flip-flop 112 appearing on line 116 will go high resulting in the clearing of flip-flop 62 and in the OR gate 118 outputting a high signal over line 120 and thereby also clearing the flip-flops 63—70 inclusive. The flip-flops 63—70 inclusive will remain in this reset condition until the power signal $V_{CC}$ goes from low to high during a power up condition which removes the reset condition of the circuit, thereby enabling the circuit to start another memory enabling operation.

**Claims**

1. Apparatus for controlling the operation of a memory device (22), including operational control means (38—46) responsive to a plurality of enabling signals ($CS_1$—$CS_3$) to provide an operating signal for said memory device (22), characterized in that said enabling signals ($CS_1$—$CS_3$) include respective sequences of signal levels, in that logic circuit means (62—86) are provided including a plurality of serially connected switching members (62—70) each except the last (70) adapted when operated to provide a

respective switching signal ($S_1$—$S_8$) conditioning the succeeding switching member (63—70) for operation, in that said logic circuit means (62—86) further includes gating means (72—86) adapted to receive said enabling signals ($CS_1$—$CS_3$ and said switching signals ($S_1$—$S_8$) and to output a series of clocking signals (CLK) in response to said enabling signals ($CS_1$—$CS_3$) conforming to a predetermined pattern, in that said clocking signals (CLK) are arranged to operate said switching members (62—70) such that a control signal (I) is produced at the last one (70) of said switching members (62—70) in response to said sequences of signal levels conforming to said predetermined pattern, and in that said control signal (I) is adapted to enable enabling control means (58) to allow said enabling signals ($CS_1$—$CS_3$) to provide said operating signal and in that there are provided disabling means (96—120) coupled to said logic circuit means (62—86) and to said switching members (62—70) and adapted in response to at least one of said clocking signals (CLK) not being produced, to disable the operation of said switching members (62—70).

2. Apparatus according to claim 1, characterized in that said disabling means includes a latch device (99) and a plurality of edge-detecting circuits (100) adapted to generate latch switching signals adapted to switch said latch device (99) to a first state in response to signal.level changes in said enabling signals ($CS_1$—$CS_3$),. said latch device (99) being adapted to be switched to a second state in response to said clocking signals (CLK).

3. Apparatus according to claim 2, characterized in that said latch device (99) has an output coupled to a bistable member (112) switchable in response to said signal level changes and thereby adapted to control the production of a disabling signal for said switching members (62—70).

4. Apparatus according to claim 1, characterized by power supply means adapted to supply power to said memory device (22), and signal generating means (48) coupled to said power supply means and adapted in response to power being supplied, to provide a reset signal for said switching members (62—70).

5. Apparatus according to claim 1, characterized in that said switching members include respective bistable flip-flop circuits (62—70).

6. Apparatus according to anyone of the preceding claims, characterized in that said memory device includes a read-only memory (22).

7. A method for controlling the operation of a memory device (22), including the steps of providing a plurality of memory enabling signals ($CS_1$—$CS_3$) and generating an operating signal for said memory device (22) in response thereto, characterized by the steps of providing said enabling signals to include respective sequences of signal levels, sequentially checking for conformity to a predetermined pattern the signal levels of predetermined ones of said enabling signals ($CS_1$—$CS_3$) by using a plurality of serially connected switching members (62—70) each except the last (70) adapted when operated to provide a respective switching signal ($S_1$—$S_8$) conditioning the succeeding switching member (63—70) for operation, and by using gating means (72—86) adapted to receive said enabling signals ($CS_1$—$CS_3$) and said switching signals ($S_1$—$S_8$) for generating clocking signals (CLK) in response to the checked signals being valid and applying said clocking signals (CLK) sequentially to the serially connected switching members (62—70), generating a control signal (I) in response to the operation of the last switching member (70), generating said operating signal in response to the provision of said control signal (I), and generating a disabling signal for said switching members (62—70) in the event that a clocking signal (CLK) is not generated.

**Patentansprüche**

1. Gerät zum Steuern des Betriebs einer Speichervorrichtung (22) mit Betriebssteuervorrichtungen (38—46), die auf eine Vielzahl von Befähigungssignalen ($CS_1$—$CS_3$) ansprechen, um ein Operationssignal für die Speichervorrichtung (22) abzugeben, dadurch gekennzeichnet, daß die Befähigungssignale ($CS_1$—$CS_3$) entsprechende Folgen von Signalpegeln aufweisen, daß logische Schaltungsvorrichtungen (62—86) vorgesehen sind, die eine Vielzahl von in Reihe geschalteten Schaltglieder (62—70) aufweisen, von denen jedes ausgenommen das letzte (70) geeignet ist, bei Betätigung ein entsprechendes Schaltsignal ($S_1$—$S_8$) abzugeben, um das darauffolgende Schaltglied (63—70) für eine Betätigung zu konditionieren, daß die logischen Schaltungsvorrichtungen ferner Torvorrichtungen (72—86) aufweisen, die geeignet sind, die Befähigungssignale ($CS_1$—$CS_3$) und die Schaltsignale ($S_1$—$S_8$) zu empfangen und eine Reihe von Taktierungssignalen (CLK) unter Ansprechen auf die Befähigungssignale ($CS_1$—$CS_8$) abzugeben, die einem bestimmten Muster entsprechen, wobei die Taktierungssignale (CLK) vorgesehen sind, um die Schaltglieder (62—70) derart zu betätigen, daß das Steuersignal (1) durch das letzte (70) der Schaltglieder (62—70) unter Ansprechen auf die Folgen von Signalpegeln, die dem vorbestimmten Muster entsprechen, erzeugt wird, und daß das Steuersignal geeignet ist zu ermöglichen, daß die Befähigungssignale ($CS_1$—$CS_3$) das Operationssignal erzeugen, und daß Abschaltvorrichtungen (96—120) vorgesehen sind, die mit den logischen Schaltungsvorrichtungen (72—86) und mit den Schaltgliedern (63—70) gekoppelt und geeignet sind unter Ansprechen darauf, daß zumindest eines der Taktierungssignale (CLK) nicht erzeugt wird, die Betätigung der Schaltglieder (62—70) zu unterbrechen.

2. Einrichtung nach Anspruch 1, dadurch gekennzeichnet, daß die Abschaltvorrichtungen eine Haltevorrichtung (99) und eine Vielzahl von Flankendetektorschaltungen (100) aufweisen, die geeignet sind, Halteschaltsignale zu erzeugen, die geeignet sindl die Haltevorrichtung (99) in einen ersten Zustand unter Ansprechen auf Signalpegeländerungen in den Befähigungssignalen ($CS_1$—$CS_3$) zu schalten, wobei die Haltevorrichtung (99) geeignet ist, unter Ansprechen auf die Taktierungssignale (CLK) in einen zweiten Zustand geschaltet zu werden.

3. Einrichtung nach Anspruch 2, dadurch gekennzeichnet, daß die Haltevorrichtung (99) einen Ausgang mit einem bistabilen Glied (112) gekoppelt hat, das unter Ansprechen auf Signalpegeländerungen schaltbar und dadurch geeignet ist, die Erzeugung eines Abschaltsignals für die Schaltglieder (62—70) zu steuern.

4. Einrichtungen nach Anspruch 1, gekennzeichnet durch Stromversorgungsvorrichtungen, die geeignet sind, Leistung an die Speichervorrichtung (22) zu legen, und Signalerzeugungsvorrichtungen (48), die mit den Stromversorgungsvorrichtungen gekoppelt und geeignet sind, unter Ansprechen auf zugeführte Leistung ein Rückstellsignal für die Schaltglieder (62—70) abzugeben.

5. Einrichtung nach Anspruch 1, dadurch gekennzeichnet, daß die Schaltglieder entsprechende bistabile Flip-Flop-Schaltungen (62—70) aufweisen.

6. Einrichtung nach einem der vorhergehenden Ansprüche, dadurch gekennzeichnet, daß die Speichervorrichtung einen Nur-Lesen-Speicher (22) aufweist.

7. Verfahren zum Steuern des Betriebs einer Speichervorrichtung (22) mit den Schritten Erzeugen einer Vielzahl von Speicherbefähigungssignalen ($CS_1$—$CS_3$) und Erzeugen eines Betriebssignals für die Speichervorrichtung (22) unter Ansprechen darauf, gekennzeichnet durch die Schritte Erzeugen der Befähigungssignale, um entsprechende Folgen von Signalpegeln einzuschließen, aufeinanderfolgendes Prüfen der Signalpegel vorbestimmter der Befähigungssignale ($CS_1$—$CS_3$) auf übereinstimmung mit einem vorbestimmten Muster unter Verwendung einer Vielzahl von in Reihe geschalteten Schaltgliedern (62—70), von denen jedes außer dem letzten (70) geeignet ist, ein entsprechendes Schaltsignal zu erzeugen, wodurch das nächste Schaltglied (63—70) für eine Betätigung konditioniert wird, und durch Verwenden von Torvorrichtungen (72—86), die geeignet sind, die Befähigungssignale ($CS_1$—$CS_3$) und die Schaltsignale ($S_1$—$S_8$) zum Erzeugen von Taktierungssignalen (CLK) unter Ansprechen darauf zu empfangen, daß die geprüften Signale gültig sind, und zum Anlegen der Taktierungssignale (CLK) nacheinander an die in Reihe geschalteten Schaltglieder (62—70), wodurch das Steuersignal (I) durch Betätigung des letzten Schaltgliedes (70) erzeug wird, Erzeugen des Betätigungssignals unter Ansprechen auf die Abgabe des Steuersignals (I) und Erzeugen eines Abschaltsignals für die Schaltglieder (62—70) im Falle, daß ein Taktierungssignal (CLK) nicht erzeugt wird.

**Revendications**

1. Appareil pour commander le fonctionnement d'un dispositif de mémoire (22), comprenant des moyens de commande opérationnelle (38—46) qui, en réponse à plusieurs signaux de validation ($CS_1$—$CS_3$), produisent un signal de mise en fonctionnement destiné audit dispositif de mémoire (22), caractérisé en ce que lesdits signaux de validation ($CS_1$—$CS_3$) comprennent des séquences respectives de niveaux de signaux, en ce qu'il est prévu des moyens à circuits logiques (62—86) comprenant plusieurs éléments de commutation (62—70) connectés en série, tous conçus sauf le dernier (70), lorsqu'ils sont mis en fonctionnement, pour produire un signal respectif de commutation ($S_1$—$S_8$) conditionnant l'élément suivant de commutation (63—70) pour le faire fonctionner, en ce que lesdits moyens à circuits logiques (62—86) comprennent en outre des moyens de déclenchement (72—86) conçus pour recevoir lesdits signaux de validation ($CS_1$—$CS_3$) et lesdits signaux de commutation ($S_1$—$S_8$) et pour délivrer une série de signaux d'horloge (CLK) en réponse à la conformité desdits signaux de validation ($CS_1$—$CS_3$) a une configuration prédéterminée, en ce que lesdits signaux d'horloge (CLK) sont disposés pour faire fonctionner lesdits éléments de commutation (62—70) de faccon qu'un signal de commande (I) soit produit par le dernier (70) desdits éléments de commutation (62—70) en réponse à la conformité desdites séquences de niveaux de signaux à ladite configuration prédéterminée, en ce que ledit signal de commande (I) est conçu pour valider des moyens (58) de commande de validation afin de permettre auxdits signaux de validation ($CS_1$—$CS_3$) de fournir ledit signal de mise en fonctionnement, et en ce qu'il est prévu des moyens (96—120) d'invalidation couplés auxdits moyens à circuits logiques (62—86) et auxdits éléments de commutation (62—70) et conçus pour invalider le fonctionnement desdits éléments de commutation (62—70) lorsqu'au moins l'un desdits signaux d'horloge (CLK) n'est pas produit.

2. Appareil selon la revendication 1, caractérisé en ce que lesdits moyens d'invalidation comprennent un dispositif à bascule (99) et plusieurs circuits (100) de détection de flanc conçus pour générer des signaux de commutation de bascule destinés à commuter ledit disposit (99) à bascule vers un premier état en réponse à des variations de niveau desdits signaux de validation ($CS_1$—$CS_3$), ledit dispositif à bascule (99) étant conçu pour être commuté vers un second état en réponse auxdits signaux d'horloge (CLK).

3. Appareil selon la revendication 2, caractérisé en ce que ledit dispositif à bascule (99) comporte une sortie couplé à un élément bistable (112) commutable en réponse auxdites variations de niveau des signaux et conçu ainsi pour commander la production d'un signal d'invalidation pour lesdits éléments de commutation (62—70).

4. Appareil selon la revendication 1, caractérisé par des moyens d'alimentation en énergie conçus pour alimenter en énergie ledit dispositif de mémoire (22), et des moyens (48) de génération de signaux couplés auxdits moyens d'alimentation en énergie et conçus pour produire, lorsqu'ils sont alimentés en énergie, un signal de restauration destiné auxdits éléments de commutation (62—70).

5. Appareil selon la revendication 1, caractérisé en ce que lesdits éléments de commutation comprennent des circuits de bascules bistables respectifs (62—70).

6. Appareil selon l'une quelconque des revendications précédentes, caractérisé en ce que ledit dispositif de mémoire comprend une mémoire morte (22).

7. Procédé pour commander le fonctionnement d'un dispositif de mémoire (22), comprenant les étapes qui consistent à produire plusieurs signaux ($CS_1$—$CS_3$) de validation de mémoire et à générer, en réponse à ces signaux, un signal de mise en fonctionnement destiné audit dispositif de mémoire (22), caractérisé par les étapes qui consistent à produire lesdits signaux de validation de façon qu'ils comprennent des séquences respectives de niveaux de signaux, à vérifier séquentiellement la conformité à une configuration prédéterminée des niveaux de signaux de certains, prédéterminés, desdits signaux de validation ($CS_1$—$CS_3$) en utilisant plusieurs éléments de commutation (62—70) connectés en série, conçus, sauf le dernier (70), lorsqu'ils sont mis en fonctionnement, pour produire un signal respectif de commutation ($S_1$—$S_8$) conditionnant l'élément de commutation suivant (63—70) pour le faire fonctionner, et par l'utilisation de moyens de déclenchement (72—86) conçus pour recevoir lesdits signaux de validation ($CS_1$—$CS_3$) et les signaux de commutation ($S_1$—$S_8$) pour générer des signaux d'horloge (CLK) en réponse à la validité des signaux vérifiés et appliquer lesdits signaux d'horloge (CLK) séquentiellement aux éléments de commutation (62—70) connectés en série, à générer un signal de commande (I) en réponse à l'opération effectuée par le dernier élément de commutation (70), à générer ledit signal de mise en fonctionnement en réponse à la présence dudit signal de commande (I), et à générer un signal d'invalidation pour lesdits éléments de commutation (62—70) dans le cas où un signal d'horloge (CLK) n'est pas généré.

FIG. 1

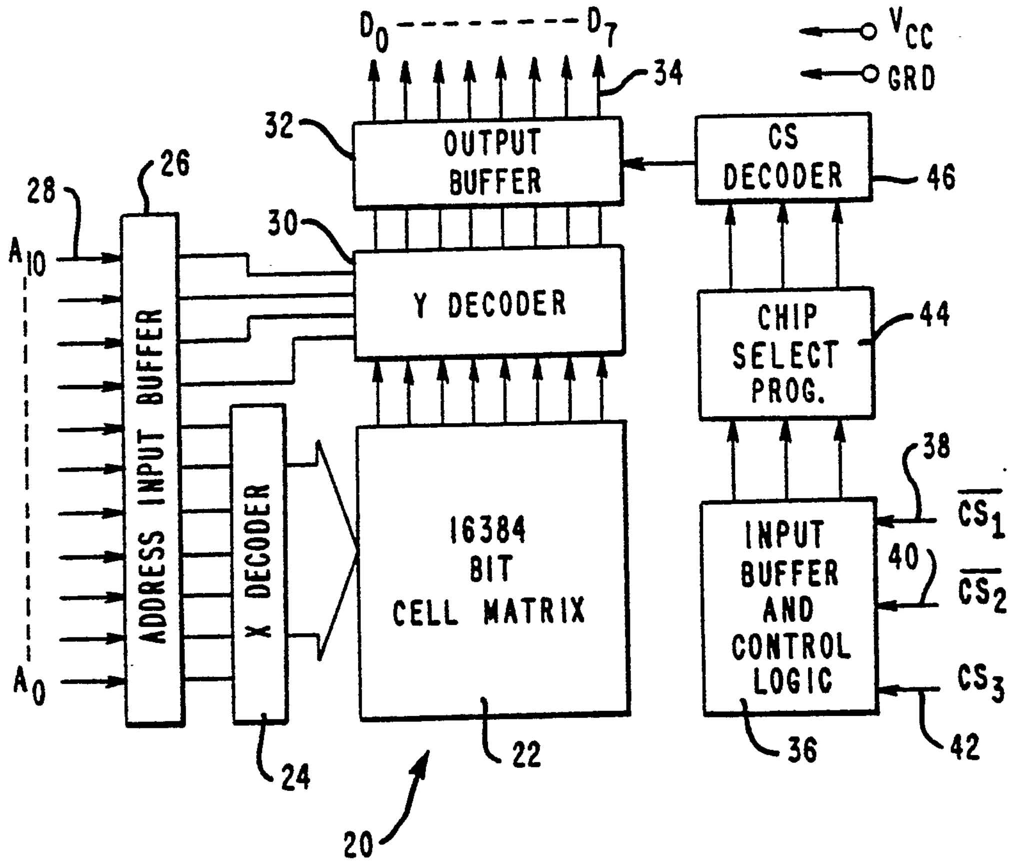

D0 D7
34
VCC
GRD
32
OUTPUT BUFFER
CS DECODER
46
28
26
30
A10
Y DECODER
CHIP SELECT PROG.
44
ADDRESS INPUT BUFFER
X DECODER
16384 BIT CELL MATRIX
38
INPUT BUFFER AND CONTROL LOGIC
CS1
40
CS2
CS3
A0
24
22
36
42
20


FIG. 2

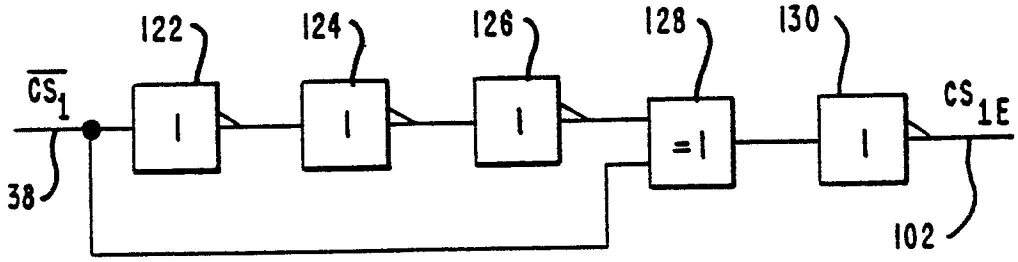

122
124
126
128
130
CS1
1
1
1
=1
1
CS1E
38
102

FIG. 3

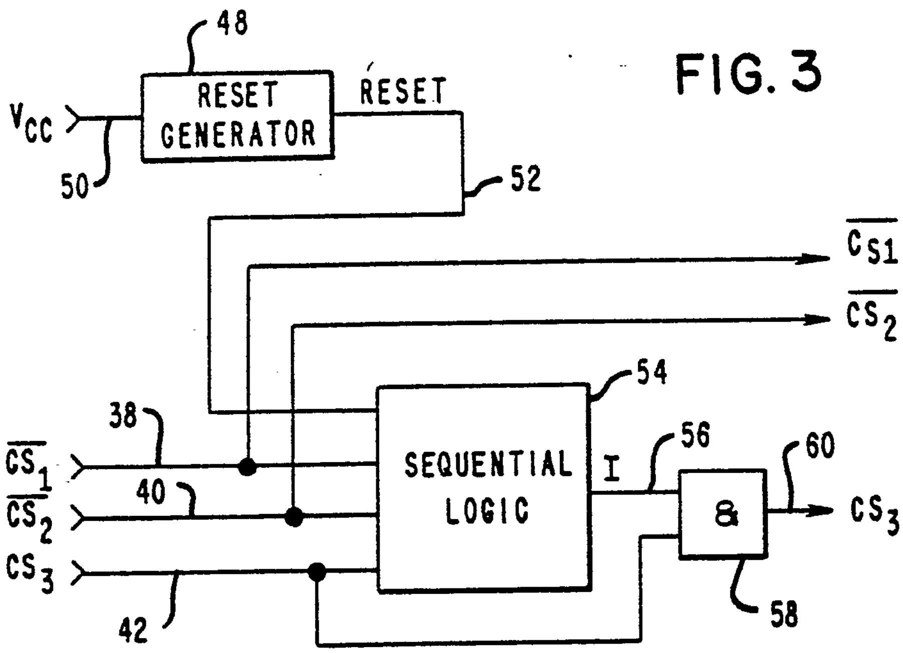
RESET GENERATOR
RESET
SEQUENTIAL LOGIC
I
&
Vcc
CS1
CS2
CS3
48
50
52
54
56
58
60
38
40
42

FIG. 4

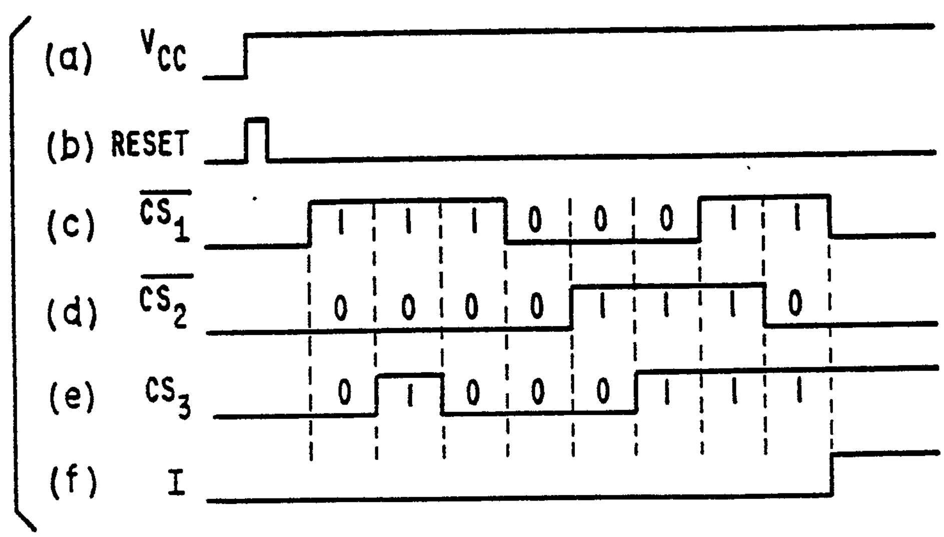
(a) Vcc
(b) RESET
(c) CS1
(d) CS2
(e) CS3
(f) I
1 1 1 0 0 0 1 1
0 0 0 0 1 1 1 0
0 1 0 0 0 1 1 1

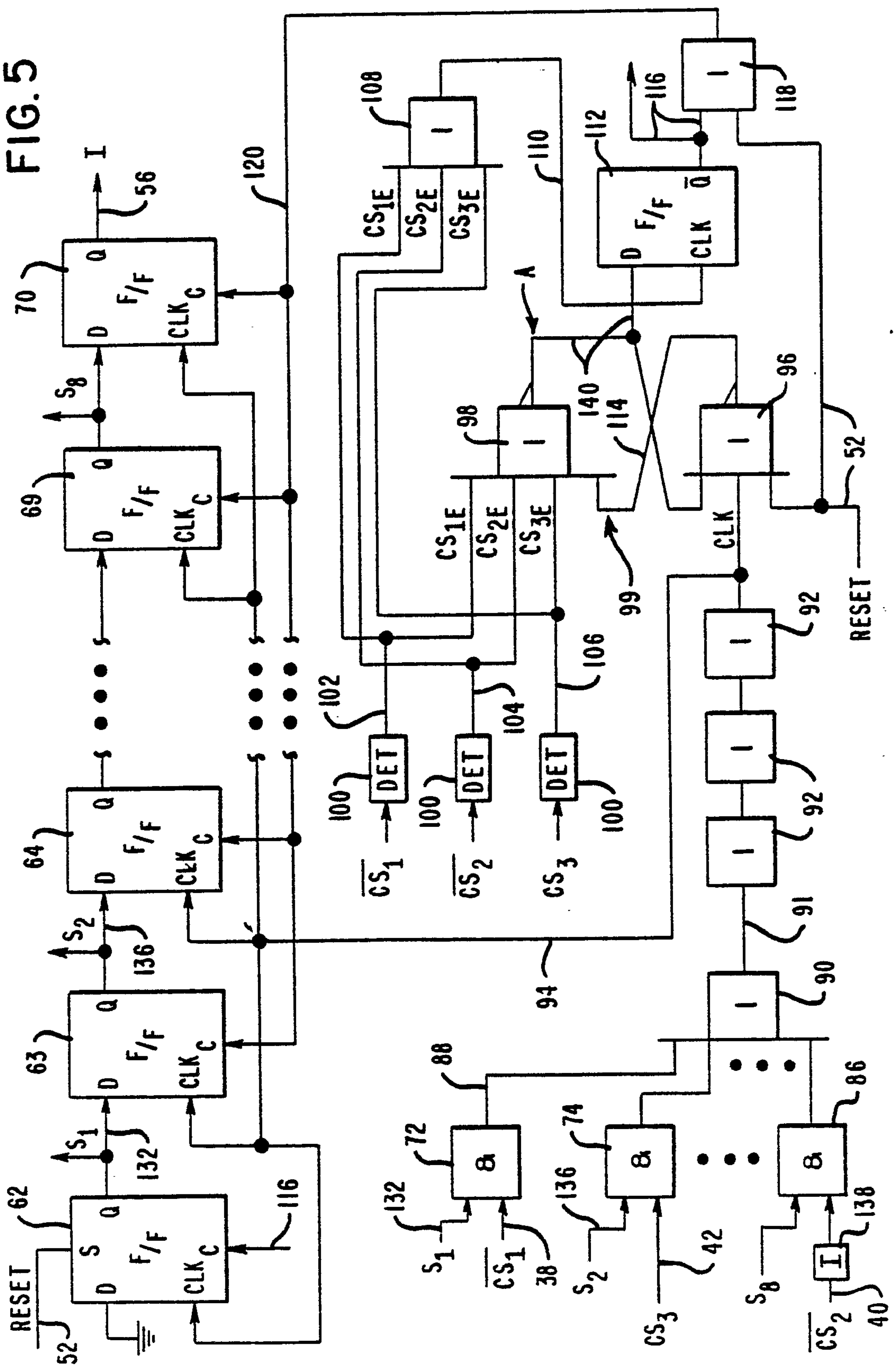


FIG. 5

FIG.6